# EUROPEAN PATENT APPLICATION

(11) **EP 3 196 498 A1**
(43) Date of publication of application: **26.07.2017**
(21) Application number: 17151826.9
(22) Date of filing: 17.01.2017
(51) Int. Cl.: F16D 48/06

(54) **CONTROLLER FOR VEHICLE AND CONTROL METHOD FOR VEHICLE**

(30) Priority: 22.01.2016 JP 2016011063
(71) Applicant: TOYOTA JIDOSHA KABUSHIKI KAISHA, Toyota-Shi, Aichi-Ken 471-8571 (JP)
(72) Inventor: MIYAZONO, Hideaki, Aichi-ken, 471-8571 (JP)
(74) Representative: J A Kemp

(57) **Abstract**

An electronic control unit (50) actuates a clutch (20) by a clutch actuator (22) during traveling of a vehicle (10)when engine torque is lower than a specified threshold. Further, the electronic control unit (50) detects displacement of the clutch (20), at which a rotational speed difference between an engine speed and an input shaft rotational speed of a transmission (18) becomes a specified rotational speed difference. Furthermore, the electronic control unit (50) corrects the displacement of the clutch (20) when the engine torque is equal to or larger than the specified threshold based on the displacement of the clutch (20), which is detected. In this way, a torque transmission limit clutch position corresponding to engine torque, at which a vehicle travels less frequently, can appropriately be estimated.

## Description

### BACKGROUND OF THE INVENTION

### 1. Field of the Invention

The invention relates to a controller for a vehicle and a control method for the vehicle.

### 2. Description of Related Art

In a power transmission apparatus for a vehicle that includes: a transmission for constituting a part of a power transmission route between an engine and drive wheels; a clutch for connecting and disconnecting the power transmission route between the engine and the transmission; and a clutch actuator for switching between engagement and disengagement of the clutch, a controller of the power transmission apparatus for the vehicle has been well known, the controller including a clutch control section that switches an actuation state of the clutch by the clutch actuator. For example, a clutch controller described in Japanese Patent Publication No. 5-77894 is such a controller. This Japanese Patent Publication No. 5-77894 discloses that, in a neutral state of the transmission, which is connected to the clutch, a clutch position at a time point when a transmission input rotational speed reaches a specified value with respect to a particular engine speed is learned as an engagement initiation position (an initiating position of half clutch) and that a learned value is corrected by using a clutch control correction value that corresponds to a lubricant temperature and a correction value of the clutch position that corresponds to the transmission input rotational speed.

### SUMMARY OF THE INVENTION

By the way, in an aspect in which a half-clutch state (the engagement initiation position of the clutch) at vehicle start is corrected through learning as in the technique described in Japanese Patent Publication No. 5-77894, the engagement initiation position of the clutch is possibly deviated at engine torque, at which the vehicle travels less frequently, (for example, high engine torque like maximum engine torque) due to an influence of wear of the clutch by use and the like. The engine torque, at which the vehicle travels less frequently, differs from the engine torque, at which learning is conducted. In addition, a torque transmission limit clutch position, at which torque transmission reaches a limit, and, at which the engaged clutch starts slipping, is also learned. The torque transmission limit clutch position is also possibly deviated at the engine torque, at which the vehicle travels less frequently, due to the influence of the wear of the clutch by use and the like. Thus, torque capacity of the clutch possibly becomes excessive or insufficient.

The invention provides such a controller for a vehicle and a control method of the vehicle, in which estimation of clutch displacement corresponding to engine torque at which the vehicle travels less frequently can appropriately be made.

A first aspect of the invention provides a controller for a vehicle. The vehicle includes an engine, drive wheels, a clutch pedal, a power transmission apparatus and an electronic control unit. The power transmission apparatus includes a transmission, a clutch, a clutch actuator. The transmission constitutes a part of a power transmission route between the engine and the drive wheels. The clutch is configured to connect and disconnect the power transmission route between the engine and the transmission. The clutch actuator is configured to switch between engagement and disengagement of the clutch. The electronic control unit is configured to switch an actuation state of the clutch by the clutch actuator. Further, the electronic control unit is configured to actuate the clutch by the clutch actuator during traveling of the vehicle when engine torque is lower than a specified threshold. Furthermore, the electronic control unit is configured to detect displacement of the clutch at which a rotational speed difference between an engine speed and an input shaft rotational speed of the transmission becomes a specified rotational speed difference. And, the electronic control unit is configured to correct the displacement of the clutch when the engine torque is or larger than equal to the specified threshold based on the displacement of the clutch.

According to the above configuration, based on the displacement of the clutch, at which the rotational speed difference between the engine speed and the input shaft rotational speed of the transmission becomes the specified rotational speed difference, and, which is detected by an electronic control unit during traveling of the vehicle, during which the engine torque is lower than the specified threshold, the electronic control unit corrects the displacement of the clutch at the time when the engine torque is equal to or larger than the specified threshold. Thus, an estimated clutch position that corresponds to high engine torque can be corrected without detecting a clutch position, at which the rotational speed difference becomes the specified rotational speed difference, and, which corresponds to the high engine torque, at which the vehicle travels less frequently. Therefore, the displacement of the clutch corresponding to the engine torque, at which the vehicle travels less frequently, can appropriately be estimated.

In the controller for the vehicle, the electronic control unit may be configured to learn a specified clutch characteristic based on lower engine torque than the specified threshold and the displacement of the clutch, which is detected by the electronic control unit, the specified clutch characteristic indicating a relationship between the displacement of the clutch and torque capacity of the clutch. Further, the electronic control unit may be configured to correct the displacement of the clutch based on the specified clutch characteristic when the engine torque is equal to or larger than the specified threshold.

According to the above configuration, the electronic control unit uses the specified clutch characteristic, which is learned based on the displacement of the clutch and the lower engine torque than the specified threshold, the displacement of the clutch being detected during traveling at the lower engine torque than the specified threshold. Then, the electronic control unit corrects the displacement of the clutch at the time when the engine torque is equal to or larger than the specified threshold. Thus, the displacement of the clutch that corresponds to the high engine torque and that reflects the actual clutch characteristic can be estimated without detecting the actual displacement of the clutch that corresponds to the high engine torque. Therefore, the displacement of the clutch corresponding to the high engine torque, at which the vehicle travels less frequently, can appropriately be estimated.

Furthermore, in the controller for the vehicle, the electronic control unit may be configured to control the clutch such that the displacement of the clutch corresponds to maximum engine torque when the engagement of the clutch is maintained. And, the maximum engine torque is torque that can be output by the engine.

According to the above configuration,
when the engagement of the clutch is maintained, the electronic control unit controls the clutch such that the displacement of the clutch corresponds to the maximum engine torque. Thus, during the engagement of the clutch, the clutch does not slip and can appropriately transmit the maximum engine torque. Alternatively, when excess torque that exceeds the maximum engine torque is input to the clutch during the engagement thereof, the clutch slips. Thus, the clutch can be actuated as a torque limiter for such excess torque.

Moreover, in the controller for the vehicle, the electronic control unit may be configured to switch the actuation state of the clutch by the clutch actuator based on an operation of the clutch pedal. Further, the electronic control unit may be configured to switch the actuation state of the clutch by the clutch actuator regardless of the operation of the clutch pedal.

According to the above configuration,the electronic control unit switches the actuation state of the clutch based on the operation of the clutch pedal, and switches the actuation state of the clutch regardless of the operation of the clutch pedal. Accordingly, when the clutch pedal is in a state of engaging the clutch, the actuation state of the clutch can be controlled such that the displacement of the clutch corresponds to the engine torque. Thus, according to the above configuration, when the clutch is brought into an engaged state in accordance with the operation of the clutch pedal, the clutch actuator can control the clutch such that an estimated displacement of the clutch corresponds to the maximum engine torque. In this way, the clutch does not slip and can appropriately transmit the maximum engine torque. In addition, the clutch can be actuated as the torque limiter for the excess torque that exceeds the maximum engine torque. For example, when the clutch is brought into the engaged state, the clutch is controlled such that the estimated displacement of the clutch corresponds to the maximum engine torque. In this way, the clutch can be actuated as the torque limiter for the excess torque, which is possibly generated when the clutch pedal is quickly operated and thus the clutch is quickly actuated for the engagement during downshifting to a gear stage on a low vehicle speed side (a low side).

A second aspect of the invention provides a control method for a vehicle. The vehicle includes an engine, drive wheels, a clutch pedal, a power transmission apparatus and an electronic control unit. The power transmission apparatus includes a transmission, a clutch, a clutch actuator. The transmission constitutes a part of a power transmission route between the engine and the drive wheels. The clutch is configured to connect and disconnect the power transmission route between the engine and the transmission. The clutch actuator is configured to switch between engagement and disengagement of the clutch. The electronic control unit is configured to switch an actuation state of the clutch by the clutch actuator. Further, the electronic control unit is configured to actuate the clutch by the clutch actuator during traveling of the vehicle when engine torque is lower than a specified threshold. Furthermore, the electronic control unit is configured to detect displacement of the clutch at which a rotational speed difference between an engine speed and an input shaft rotational speed of the transmission becomes a specified rotational speed difference. And, the electronic control unit is configured to correct the displacement of the clutch when the engine torque is equal to or larger than the specified threshold based on the displacement of the clutch.

According to the above configuration, based on the displacement of the clutch, at which the rotational speed difference between the engine speed and the input shaft rotational speed of the transmission becomes the specified rotational speed difference, and, which is detected by an electronic control unit during traveling of the vehicle, during which the engine torque is lower than the specified threshold, the electronic control unit corrects the displacement of the clutch at the time when the engine torque is equal to or larger than the specified threshold. Thus, an estimated clutch position that corresponds to high engine torque can be corrected without detecting a clutch position, at which the rotational speed difference becomes the specified rotational speed difference, and, which corresponds to the high engine torque, at which the vehicle travels less frequently. Therefore, the displacement of the clutch corresponding to the engine torque, at which the vehicle travels less frequently, can appropriately be estimated.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view for explaining a schematic configuration of a vehicle, to which the invention is applied, and is also a view for explaining main sections of a control function and a control system for various types of control in the vehicle;
FIG. 2 is a chart of one example of a relationship between an accelerator pedal operation amount and engine torque, and is also a chart of one example of a travel state where an actual torque transmission limit clutch position is detected;
FIG. 3 is a chart of one example of a specified clutch characteristic; and
FIG. 4 is a flowchart for explaining main sections of control actuation of an electronic control unit, that is, the control actuation for appropriately estimating the torque transmission limit clutch position corresponding to engine torque, at which the vehicle travels less frequently.

### DETAILED DESCRIPTION OF EMBODIMENTS

A detailed description will hereinafter be made on an embodiment of the invention with reference to the drawings.

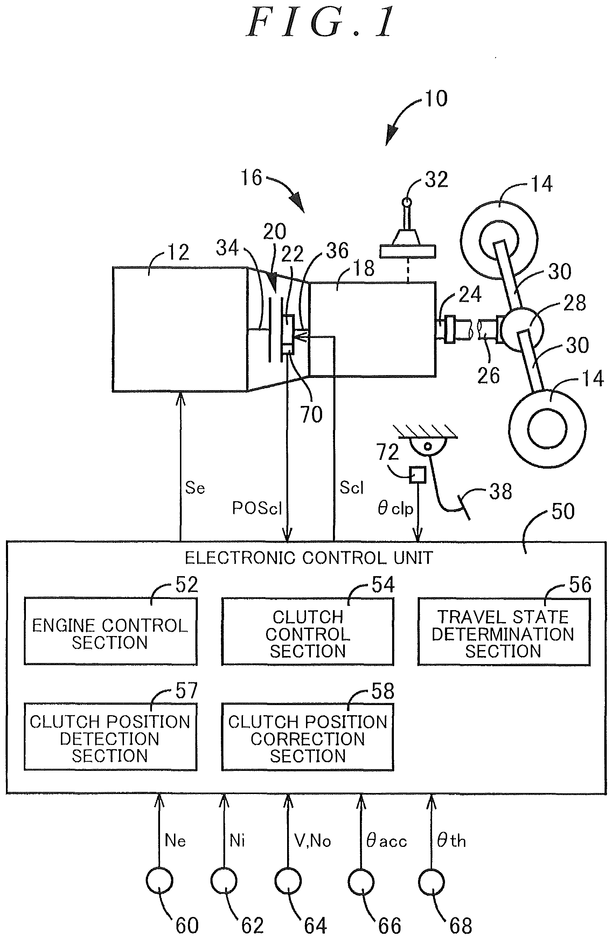

FIG. 1 is a view for explaining a schematic configuration of a vehicle 10, to which the invention is applied, and is also a view for explaining main sections of a control system for various types of control in the vehicle 10. In FIG. 1, the vehicle 10 includes an engine 12, drive wheels 14, and a power transmission apparatus 16 for the vehicle (hereinafter referred to as a power transmission apparatus 16) that is provided in a power transmission route between the engine 12 and the drive wheels 14. The power transmission apparatus 16 includes: a transmission 18 for constituting a part of the power transmission route between the engine 12 and the drive wheels 14; a clutch 20 for connecting/disconnecting the power transmission route between the engine 12 and the transmission 18; a clutch actuator 22 for switching between engagement and disengagement of the clutch 20; a propeller shaft 26 coupled to a transmission output shaft 24 as an output rotary member of the transmission 18; a differential gear device (a differential gear) 28 coupled to the propeller shaft 26; a pair of axles 30 coupled to the differential gear device 28; and the like. In the power transmission apparatus 16, power that is output from the engine 12 (torque and a force are defined the same unless otherwise distinguished) is transmitted to the drive wheels 14 sequentially via the clutch 20, the transmission 18, the propeller shaft 26, the differential gear device 28, the axles 30, and the like.

The engine 12 is a drive power source of the vehicle 10 and is a known internal combustion engine such as a gasoline engine or a diesel engine. Engine torque Te of this engine 12 is controlled when operation states of the engine 12. such as an intake air amount, a fuel supply amount, and ignition timing, are controlled by an electronic control unit 50, which will be described below.

The transmission 18 is, for example, a known manual transmission of a parallel shaft, constantly meshed type that includes plural pairs of transmission gears between two shafts, and each pair of the transmission gears constantly mesh with each other. In the transmission 18, any of a forward gear stage (for example, a fifth forward stage), a reverse gear stage (for example, a first reverse stage), and neutral is selectively established by a manual operation of a shift lever 32 that is provided near a driver's seat in the vehicle 10.

The clutch 20 is, for example, a known friction clutch of a dry single plate type. A release sleeve (not shown) of the clutch 20 is moved when the clutch actuator 22 is driven by the electronic control unit 50, which will be described below. Then, an inner end of a diaphragm spring (not shown) is displaced, and an actuation state of the clutch 20 is thereby switched. In a state where the clutch actuator 22 does not move the release sleeve, the clutch 20 is engaged, and the power transmission route between the engine 12 and the transmission 18 is connected. On the contrary, when the clutch actuator 22 moves the release sleeve in the clutch 20, the release sleeve presses an inner end of the diaphragm spring. In conjunction with this, an urging force of the diaphragm spring is reduced, and torque capacity of the clutch 20 is also reduced. Then, once displacement of the release sleeve (that is, a clutch position POScl) reaches a specified amount, the clutch 20 is disengaged, and the power transmission route between the engine 12 and the transmission 18 is disconnected (blocked). Just as described, the clutch 20 is provided to be able to connect/disconnect the power transmission route between the engine 12 and the transmission 18 when the clutch actuator 22 switches the actuation state of the clutch 20. The power transmission route is a power transmission route between a crankshaft 34 of the engine 12 and a transmission input shaft 36 as an input rotary member of the transmission 18.

In the clutch 20, the clutch actuator 22 is driven by the electronic control unit 50, which will be described below, based on a clutch pedal operation amount θclp at a time when a clutch pedal 38, which is provided near the driver's seat in the vehicle 10, is depressed for an operation. The actuation state of the clutch 20 can thereby be switched. When the clutch pedal 38 is depressed, the clutch 20 slips or is disengaged. Then, once depression of the clutch pedal 38 is canceled, the clutch 20 is engaged. Alternatively, regardless of the operation of the clutch pedal 38, the actuation state of the clutch 20 can be switched when the clutch actuator 22 is driven by the electronic control unit 50. For example, even in the case where the clutch pedal 38 is not depressed, the clutch 20 can slip or be disengaged when the clutch actuator 22 moves the release sleeve. The clutch actuator 22 is of an electric type or a hydraulic type. In accordance with the displacement (that is, the clutch position POScl) of the release sleeve, which is changed by actuation of the clutch actuator 22, the torque capacity of the clutch 20 is controlled.

The vehicle 10 includes the electronic control unit 50 that includes a controller of the power transmission apparatus 16, and the controller is associated with switching control of the actuation state of the clutch 20 and the like, for example. Accordingly, FIG. 1 is a view of an input/output system of the electronic control unit 50. FIG. 1 is further a functional block diagram for explaining main sections of a control function of the electronic control unit 50. The electronic control unit 50 is configured by including a so-called microcomputer that includes a CPU, a RAM, a ROM, input/output interfaces, and the like, for example. The CPU processes signals in accordance with a program, which is stored in the ROM in advance, while using a temporary storage function of the RAM, and thereby executes various types of control for the vehicle 10. For example, the electronic control unit 50 executes output control of the engine 12, the switching control of the clutch 20, and the like, and is configured by being divided for the engine output control, the clutch control, and the like upon necessary.

The electronic control unit 50 is supplied with various actual values that are based on detection signals detected by various sensors provided in the vehicle 10. The various sensors include an engine speed sensor 60, an input rotational speed sensor 62, an output rotational speed sensor 64, an accelerator pedal operation amount sensor 66, a throttle valve opening degree sensor 68, a clutch position sensor 70, a clutch pedal sensor 72, and the like, for example. The various actual values include: an engine speed Ne; a transmission input rotational speed Ni as an input shaft rotational speed of the transmission 18 (that is, a rotational speed of the transmission input shaft 36); a transmission output rotational speed No, which is a rotational speed of the transmission output shaft 24 and corresponds to a vehicle speed V; an accelerator pedal operation amount θacc as an operation amount of an accelerator pedal; a throttle valve opening degree θth as an opening degree of an electronic throttle valve; the clutch position POScl as the displacement of the clutch 20; the clutch pedal operation amount θclp as an operation amount (a depression amount) at a time when the driver depresses the clutch pedal 38 for the operation; and the like, for example. Meanwhile, the electronic control unit 50 outputs an engine output control command signal Se for the output control of the engine 12, a clutch control command signal Scl for the switching control of the actuation state of the clutch 20, and the like. This clutch control command signal Scl is a command signal used to move the release sleeve, which switches the actuation state of the clutch 20, to the clutch position POScl as a target, and is output to the clutch actuator 22.

In order to realize the control function for the various types of the control for the vehicle 10, the electronic control unit 50 includes engine control means, that is, an engine control section 52 and clutch control means, that is, a clutch control section 54.

The engine control section 52 applies the accelerator pedal operation amount θacc to a relationship that is computed in an experiment or design and stored in advance (that is, predetermined) (for example, a throttle valve opening degree map), and thereby computes a target throttle valve opening degree θthtgt. The engine control section 52 executes the output control of the engine 12 by driving a throttle actuator so as to obtain the target throttle valve opening degree θthtgt and by outputting the engine output control command signal Se, which is used to actuate a fuel injector in accordance with the intake air amount and the like.

The clutch control section 54 outputs the clutch control command signal Scl, which is used to switch the actuation state of the clutch 20 by the clutch actuator 22. More specifically, the clutch control section 54 can switch the actuation state of the clutch 20 by the clutch actuator 22 based on the operation of the clutch pedal 38. For example, the clutch control section 54 outputs the clutch control command signal Scl for controlling the clutch position POScl to the clutch actuator 22 so as to bring the clutch 20 into an actuation state that corresponds to the clutch pedal operation amount θclp. In addition, the clutch control section 54 can switch the actuation state of the clutch 20 by the clutch actuator 22 regardless of the operation of the clutch pedal 38. For example, in the cases where the clutch pedal operation amount θclp is zero, an accelerator is off during a deceleration travel, and a braking operation (for example, a brake pedal operation) for actuating a wheel brake is not performed, the clutch control section 54 outputs the clutch control command signal Scl to the clutch actuator 22 under such a condition that the vehicle speed V falls within a predetermined clutch disengagement region. The clutch control command signal Scl is a signal for controlling the clutch position POScl so as to cause slipping or disengagement of the clutch 20, and is output to the clutch actuator 22 to initiate coasting control, which blocks power transmission between the engine 12 and the transmission 18.

Here, a case where the actuation state of the clutch 20 is kept engaged will be described. In the case where the torque capacity of the clutch 20 is equal to or larger than maximum engine torque Temax that can be output by the engine 12, the engine torque Te can be transmitted without causing slipping of the clutch 20 even when the release sleeve in the clutch 20 is not moved (that is, even when the clutch position POScl does not become zero). Meanwhile, excess torque that exceeds the maximum engine torque Temax is possibly input to the clutch 20 in any of the following cases: (i) the clutch pedal 38 is quickly operated and thus the clutch 20 is quickly actuated for the engagement during downshifting to the gear stage on a low vehicle speed side (a low side) of the transmission 18; (ii) a shifting operation is performed by the driver, which makes the engine speed Ne excessively high; and (iii) a tire is locked on an icy road. Accordingly, when the engagement of the clutch 20 is maintained, the clutch control section 54 controls the clutch 20 to be located at the clutch position POScl that corresponds to the maximum engine torque Temax. In other words, when the engagement of the clutch 20 is maintained, the clutch control section 54 allows appropriate transmission of the maximum engine torque Temax without causing slipping of the clutch 20. Furthermore, the input of the excess torque that exceeds the maximum engine torque Temax can be blocked by controlling the clutch position POScl to be an estimated torque transmission limit clutch position that corresponds to the maximum engine torque Temax by the clutch actuator 22. This torque transmission limit clutch position is the clutch position POScl at which the engaged clutch 20 starts slipping, and thus is a torque transmission limit. Accordingly, when the excess torque that exceeds the maximum engine torque Temax is input to the clutch 20 during the engagement of the clutch 20, the clutch 20 slips. Thus, the clutch 20 can be actuated as a torque limiter for such excess torque.

By the way, due to wear of the clutch 20 by use, thermal expansion of the clutch 20 during use, a change in a clutch fluid characteristic, and the like, an actual torque transmission limit clutch position that corresponds to the maximum engine torque Temax possibly changes. Thus, unless the changing actual torque transmission limit clutch position is constantly grasped, there is a possibility that the input of the excess torque, which exceeds the maximum engine torque Temax, cannot accurately be blocked. To handle such a problem, it is considered to correct (learn) the actual torque transmission limit clutch position that corresponds to the maximum engine torque Temax. However, because frequency of traveling at the maximum engine torque Temax is low, it may be difficult to appropriately handle a change in the actual torque transmission limit clutch position.

In view of the above, the electronic control unit 50 detects the actual torque transmission limit clutch position that corresponds to low engine torque during traveling at the low engine torque, at which the vehicle travels frequently. The electronic control unit 50 uses this actual torque transmission limit clutch position, which is detected, to learn (correct) a specified clutch characteristic that indicates a relationship between the torque transmission limit clutch position and the torque capacity of the clutch 20. Then, the electronic control unit 50 uses this specified clutch characteristic to compute (correct) the estimated torque transmission limit clutch position that corresponds to the maximum engine torque Temax.

In order to realize the above-described control for correcting the estimated torque transmission limit clutch position that corresponds to the maximum engine torque Temax, the electronic control unit 50 further includes travel state determination means, that is, a travel state determination section 56, clutch position detection means, that is, a clutch position detection section 57, and clutch position correction means, that is, a clutch position correction section 58.

The travel state determination section 56 determines whether a specified travel condition for detecting the actual torque transmission limit clutch position by the clutch position detection section 57 is established. The travel state determination section 56 also determines whether the specified travel condition remains established during detection of the actual torque transmission limit clutch position by the clutch position detection section 57. The travel state determination section 56 further determines whether the detection of the actual torque transmission limit clutch position by the clutch position detection section 57 is completed. The above specified travel condition is that, for example, the actual engine torque Te has one of plural values of the engine torque Te, at which the actual torque transmission limit clutch position is detected by the clutch position detection section 57, and a change in the engine torque Te falls within specified change width. For the plural values of the engine torque Te, a specified value of the engine torque Te is provided in consideration of frequency of the engine torque Te to be used, for example. Then, when the engine torque Te is lower than the specified value, it is referred to as the low engine torque. When the engine torque Te is equal to or larger than the specified value, it is referred to as high engine torque. Alternatively, plural values of the high-frequency engine torque Te may be divided into the low engine torque and intermediate engine torque in accordance with a magnitude of the engine torque Te, and the maximum engine torque Temax that can be output by the engine 12 may be set as the high engine torque. In consideration of the frequency of the engine torque Te to be used, the specified travel condition may include a condition that the engine torque Te is lower than the specified value. This specified value is a predetermined specified threshold that is used for a determination that the frequency of the engine torque Te to be used is high, for example.

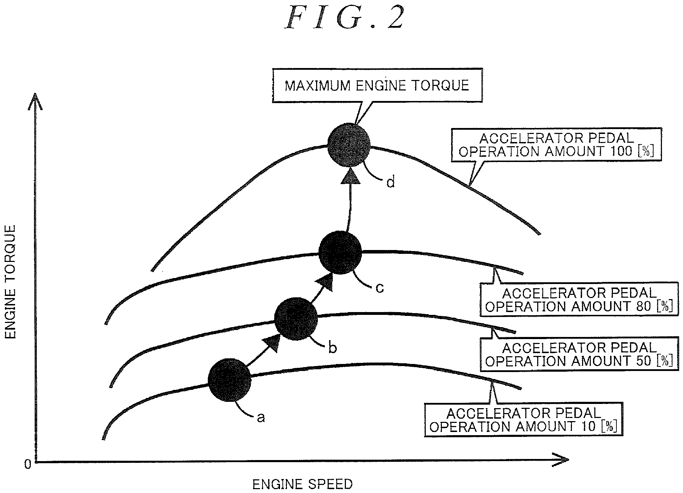

Because the engine torque Te is controlled in accordance with the accelerator pedal operation amount θacc, the plural values of the engine torque Te may be replaced with the plural accelerator pedal operation amounts θacc. In other words, the plural values of the engine torque Te, which are divided into the low engine torque, the intermediate engine torque, and the high engine torque, may be categorized by the plural accelerator pedal operation amounts θacc that are a small accelerator pedal operation amount, an intermediate accelerator pedal operation amount, and a large accelerator pedal operation amount. As a travel state where the actual torque transmission limit clutch position is detected by the clutch position detection section 57, travel states as indicated by a point a, a point b, a point c, and a point d in FIG. 2 are raised. The point a, the point b, the point c, and the point d each indicate a travel state that is represented by the accelerator pedal operation amount θacc and the engine speed Ne, and is predetermined as a travel state where the vehicle travels frequently when traveling on a flat road with the accelerator pedal operation amount θacc being substantially constant at the certain gear stage of the transmission 18. When the vehicle travels in the travel state as indicated by any of the point a, the point b, the point c, and the point d, the travel state determination section 56 determines that the specified travel condition is established. In FIG. 2, the point a corresponds to the small accelerator pedal operation amount (for example, θacc = 10[%]), the point b corresponds to the intermediate accelerator pedal operation amount (for example, θacc = 50[%]), the point c corresponds to the intermediate accelerator pedal operation amount (for example, θacc = 80[%]), and the point d corresponds to the large accelerator pedal operation amount (for example, θacc = 100[%]).

During traveling, during which the travel state determination section 56 determines that the specified travel condition is established, the clutch position detection section 57 detects the actual torque transmission limit clutch position that corresponds to the engine torque Te (here, the accelerator pedal operation amount θacc means the same) at a time when the specified travel condition is established. During traveling, during which the clutch 20 is engaged, the clutch position detection section 57 outputs the clutch control command signal Scl to the clutch actuator 22 until a rotational speed difference between the engine speed Ne and the transmission input rotational speed Ni (hereinafter referred to as an input/output rotational speed difference ΔNcl of the clutch 20) becomes a specified rotational speed difference. The clutch control command signal Scl is a signal that is used by the clutch actuator 22 to actuate the clutch 20 from the engagement to the disengagement. Then, the clutch position detection section 57 detects the clutch position POScl at a time when the input/output rotational speed difference ΔNcl of the clutch 20 becomes the specified rotational speed difference as the actual torque transmission limit clutch position that corresponds to the engine torque Te at the time when the specified travel condition is established. For example, it is considered that the actual torque transmission limit clutch position is detected during traveling at the low engine torque, at which the vehicle travels frequently. Thus, the clutch position detection section 57 causes the clutch actuator 22 to actuate the clutch 20 during traveling of the vehicle 10, in which the travel state determination section 56 has determined that the engine torque Te is lower than the specified value. Then, the clutch position detection section 57 detects the clutch position POScl, at which the input/output rotational speed difference ΔNcl of the clutch 20 becomes the specified rotational speed difference. In other words, the clutch position detection section 57 detects the actual torque transmission limit clutch position that corresponds to the low engine torque during traveling at the low engine torque (here, the small accelerator pedal operation amount means the same) of the plural values of the engine torque Te (here, the plural accelerator pedal operation amounts θacc mean the same), at each of which the specified travel condition is established.

Based on the clutch position POScl that is detected by the clutch position detection section 57, the clutch position correction section 58 corrects the clutch position POScl at a time when the engine torque Te differs from the engine torque Te, at which the clutch position POScl is detected. For example, the actual torque transmission limit clutch position that corresponds to the low engine torque, at which the vehicle travels frequently, is detected. Accordingly, based on the clutch position POScl that is detected by the clutch position detection section 57 during traveling of the vehicle 10, during which the engine torque Te is lower than the specified value, the clutch position correction section 58 corrects the clutch position POScl at a time when the engine torque Te is equal to or larger than the specified value. A detailed description will be made below on correction of this clutch position POScl.

The clutch position correction section 58 learns the specified clutch characteristic, which indicates a relationship between the clutch position POScl and the torque capacity of the clutch 20, based on the clutch position POScl detected by the clutch position detection section 57 and the engine torque Te at the time when the clutch position POScl is detected. For example, the actual torque transmission limit clutch position that corresponds to the low engine torque, at which the vehicle travels frequently, is detected. Accordingly, the clutch position correction section 58 learns the specified clutch characteristic based on : the clutch position POScl that is detected by the clutch position detection section 57 during traveling of the vehicle 10, during which the engine torque Te is lower than the specified value; and the lower engine torque Te than the specified value at the time. More specifically, based on the engine torque at the time when the specified travel condition is established as well as the actual torque transmission limit clutch position that corresponds to the engine torque, the clutch position correction section 58 learns the specified clutch characteristic such that the specified clutch characteristic matches an actual clutch characteristic. For example, the actual torque transmission limit clutch position that corresponds to the low engine torque, at which the vehicle travels frequently, is detected. Then, based on the actual torque transmission limit clutch position that corresponds to the low engine torque at the time when the specified travel condition is established as well as the low engine torque, the clutch position correction section 58 learns the specified clutch characteristic such that the specified clutch characteristic matches the actual clutch characteristic.

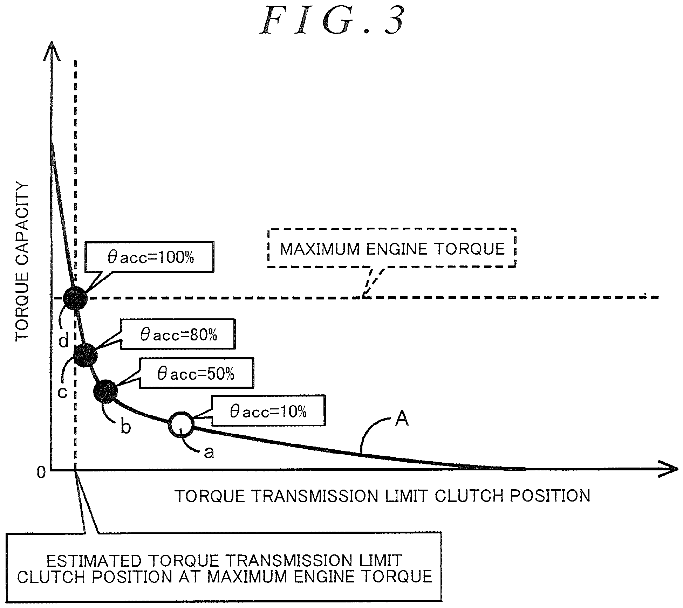

FIG. 3 is a chart of one example of the specified clutch characteristic. The clutch position correction section 58 computes the engine torque Te by using the accelerator pedal operation amount θacc. More specifically, the clutch position correction section 58 computes the engine torque Te by applying the accelerator pedal operation amount θacc and the engine speed Ne to the relationship between the accelerator pedal operation amount θacc and the engine torque Te as shown in FIG. 2. Then, the clutch position correction section 58 determines whether the state indicated by the actual torque transmission limit clutch position, which corresponds to the engine torque Te, and the engine torque Te obtained by the accelerator pedal operation amount θacc of the time (for example, see a point a in FIG. 3 that corresponds to the small accelerator pedal operation amount) is located on the current specified clutch characteristic (see a solid line A in FIG. 3). In the case where the clutch position correction section 58 determines that the above state (see the point a in FIG. 3) is located on the current specified clutch characteristic, the clutch position correction section 58 does not correct (change) the current specified clutch characteristic. On the other hand, in the case where the clutch position correction section 58 determines that the above state (see the point a in FIG. 3) is not located on the current specified clutch characteristic, the clutch position correction section 58 corrects (changes) the current specified clutch characteristic such that the above state (see the point a in FIG. 3) is located on the specified clutch characteristic. This correction is made by deviating the entire current specified clutch characteristic to a side where a value of the torque transmission limit clutch position is increased or to a side where the value of the torque transmission limit clutch position is reduced, for example.

By using the post-learning specified clutch characteristic, the clutch position correction section 58 corrects the clutch position POScl at the time when the engine torque Te differs from the engine torque Te, at which the clutch position POScl is detected by the clutch position detection section 57. For example, the actual torque transmission limit clutch position that corresponds to the low engine torque, at which the vehicle travels frequently, is detected. Accordingly, by using the post-learning specified clutch characteristic, the clutch position correction section 58 corrects the clutch position POScl at the time when the engine torque Te is equal to or larger than the specified value. More specifically, the clutch position correction section 58 applies the different engine torque Te from the engine torque Te at the time when the specified travel condition is established to the specified clutch characteristic, and corrects the estimated torque transmission limit clutch position that corresponds to the different engine torque Te. For example, the actual torque transmission limit clutch position that corresponds to the low engine torque, at which the vehicle travels frequently, is detected. Then, by applying the intermediate engine torque to the specified clutch characteristic, the clutch position correction section 58 corrects the estimated torque transmission limit clutch position that corresponds to the intermediate engine torque (see a point b and a point c in FIG. 3). In addition, by applying the high engine torque (here, the maximum engine torque Temax) to the specified clutch characteristic, the clutch position correction section 58 corrects the estimated torque transmission limit clutch position that corresponds to the high engine torque (see a point d in FIG. 3).

The above-described specified clutch characteristic is learned every time the specified travel condition is established. It is considered that the actual torque transmission limit clutch position is located near the estimated torque transmission limit clutch position even when being changed by the thermal expansion or the like. Thus, in the cases where learning is repeatedly conducted and the actual torque transmission limit clutch position is detected, the clutch position POScl can promptly be moved to a position near the actual torque transmission limit clutch position detected last time within such a range that the clutch position POScl does not move beyond the actual torque transmission limit clutch position detected last time or to a position near the estimated torque transmission limit clutch position corrected last time within such a range that the clutch position POScl does not move beyond the estimated torque transmission limit clutch position corrected last time. In this way, the actual torque transmission limit clutch position can promptly be detected. More specifically, the clutch position detection section 57 outputs the clutch control command signal Scl to the clutch actuator 22 until the input/output rotational speed difference ΔNcl of the clutch 20 becomes the specified rotational speed difference during traveling at the intermediate engine torque. Here, of the plural values of the engine torque Te, at which the specified travel condition is established, the vehicle travels second most frequently at the intermediate engine torque after the low engine torque. The clutch control command signal Scl is output by using the estimated torque transmission limit clutch position that corresponds to the intermediate engine torque. In other words, the clutch control command signal Scl is output while the clutch position POScl is promptly be moved to a position near the estimated torque transmission limit clutch position that corresponds to the intermediate engine torque within such a range that the clutch position POScl does not move beyond the estimated torque transmission limit clutch position. Here, the clutch control command signal Scl is the signal that is used by the clutch actuator 22 to actuate the clutch 20 from the engagement to the disengagement. Then, the clutch position detection section 57 detects the clutch position POScl at the time when the input/output rotational speed difference ΔNcl of the clutch 20 becomes the specified rotational speed difference as the actual torque transmission limit clutch position that corresponds to the intermediate engine torque.

Based on the actual torque transmission limit clutch position that corresponds to the intermediate engine torque as well as the intermediate engine torque, the clutch position correction section 58 learns the specified clutch characteristic such that the specified clutch characteristic matches the actual clutch characteristic. Because the intermediate engine torque is closer to the high engine torque (here, the maximum engine torque Temax) than to the low engine torque, learning accuracy of the specified clutch characteristic on the high engine torque side is improved.

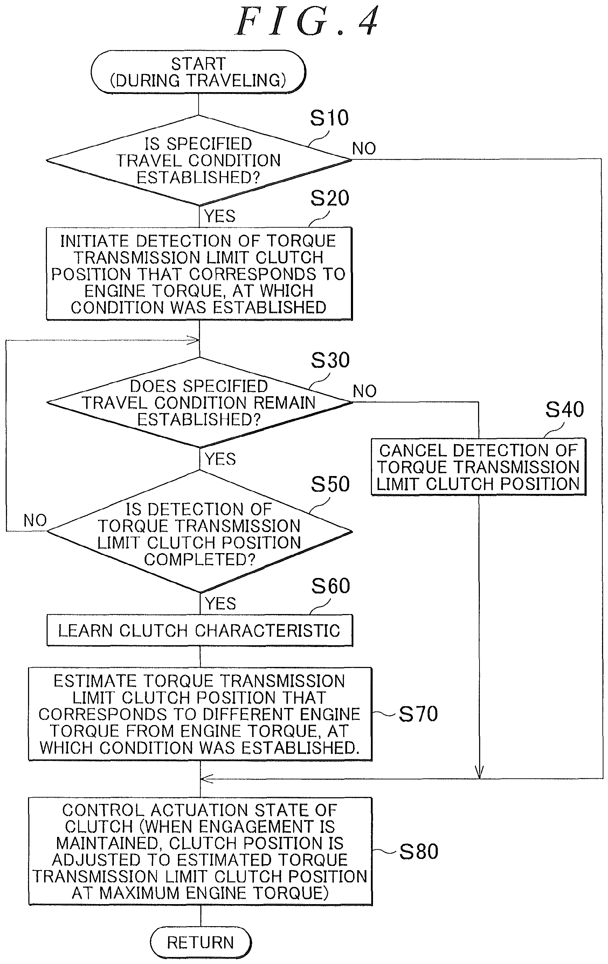

FIG. 4 is a flowchart for explaining main sections of control actuation of the electronic control unit 50, that is, the control actuation for appropriately estimating the torque transmission limit clutch position corresponding to engine torque, at which the vehicle travels less frequently (for example, the maximum engine torque Temax). The flowchart in FIG. 4 is repeatedly executed during traveling of the vehicle, for example.

In FIG. 4, initially in step (hereinafter step is omitted) S10 that corresponds to a function of the travel state determination section 56, it is determined whether the specified travel condition for detecting the actual torque transmission limit clutch position is established. If the determination of this S10 is positive, in S20 that corresponds to a function of the clutch position detection section 57, the detection of the actual torque transmission limit clutch position that corresponds to the engine torque Te (here, the accelerator pedal operation amount θacc means the same), at which the specified travel condition is established, is initiated. Next, in S30 that corresponds to a function of the travel state determination section 56, it is determined whether the specified travel condition remains established. If the determination of this S30 is negative, in S40 that corresponds to the function of the clutch position detection section 57, the detection of the actual torque transmission limit clutch position, which was initiated at above S20, is cancelled. If the determination of this S30 is positive, in S50 that corresponds to the function of the travel state determination section 56, it is determined whether the detection of the actual torque transmission limit clutch position, which was initiated at above S20, is completed. If the determination of this S50 is negative, the process returns to above S30. If the determination of this S50 is positive, in S60 that corresponds to a function of the clutch position correction section 58, the specified clutch characteristic is learned based on the engine torque, at which the specified travel condition was established, and the actual torque transmission limit clutch position corresponding to the engine torque such that the specified clutch characteristic matches the actual clutch characteristic. Next, in S70 that corresponds to the function of the clutch position correction section 58, the estimated torque transmission limit clutch position is corrected by using the specified clutch characteristic. Here, the estimated torque transmission limit clutch position corresponds to the different engine torque Te from the engine torque Te, at which the specified travel condition is established. If the determination of this S10 is negative, or by following above S40 or above S70, the actuation state of the clutch 20 is controlled in S80 that corresponds to a function of the clutch control section 54. For example, if the engagement of the clutch 20 is maintained, the clutch position POScl is controlled to be the estimated torque transmission limit clutch position, which corresponds to the maximum engine torque Temax, by the clutch actuator 22.

In above S10 to S70, initially, the specified travel condition is established during traveling at the low engine torque (for example, the lower engine torque Te than the specified value), at which the vehicle travels frequently. Then, the actual torque transmission limit clutch position that corresponds to the low engine torque is detected. The specified clutch characteristic is learned based on this actual torque transmission limit clutch position that corresponds to the low engine torque. By using this specified clutch characteristic, the estimated torque transmission limit clutch position that corresponds to the intermediate engine torque Te and the estimated torque transmission limit clutch position that corresponds to the maximum engine torque Temax are corrected. Here, the intermediate engine torque Te (for example, the engine torque Te that is equal to or larger than the specified value) differs from the low engine torque. In the case where the actual torque transmission limit clutch position is detected when the flowchart in FIG. 4 is repeatedly executed, the clutch position POScl is moved to the position near the actual torque transmission limit clutch position detected last time within such a range that the clutch position POScl does not move beyond the actual torque transmission limit clutch position detected last time or to the position near the estimated torque transmission limit clutch position corrected last time within such a range that the clutch position POScl does not move beyond the estimated torque transmission limit clutch position corrected last time. For example, the specified travel condition is established during traveling at the intermediate engine torque, at which the vehicle travels second most frequently after the low engine torque. Then, the actual torque transmission limit clutch position that corresponds to the intermediate engine torque is detected. At the time, the clutch position POScl is promptly be moved to a position near the estimated torque transmission limit clutch position, which corresponds to the intermediate engine torque. and is corrected last time, within such a range that the clutch position POScl does not move beyond the estimated torque transmission limit clutch position. Then, the specified clutch characteristic is learned based on this actual torque transmission limit clutch position that corresponds to the detected intermediate engine torque.

As described above, according to this embodiment, the torque transmission limit clutch position at the time when the engine torque Te is equal to or larger than the specified value is corrected based on the torque transmission limit clutch position. The torque transmission limit clutch position is detected during traveling of the vehicle 10, during which the engine torque Te is lower than the specified value, and at which the input/output rotational speed difference ΔNcl of the clutch 20 becomes the specified rotational speed difference. Thus, the estimated torque transmission limit clutch position that corresponds to the high engine torque can be corrected without detecting the torque transmission limit clutch position at which the input/output rotational speed difference ΔNcl becomes the specified rotational speed difference and which corresponds to the high engine torque, at which the vehicle travels less frequently. Therefore, the torque transmission limit clutch position that corresponds to the engine torque Te, at which the vehicle travels less frequently, can appropriately be estimated.

In addition, according to this embodiment, the torque transmission limit clutch position at the time when the engine torque Te is equal to or larger than the specified value is corrected by using the specified clutch characteristic. The specified clutch characteristic is learned based on : the torque transmission limit clutch position that is detected during traveling, during which the engine torque Te is lower than the specified value; and the lower engine torque Te than the specified value. Thus, the torque transmission limit clutch position that corresponds to the high engine torque and that reflects the actual clutch characteristic can be estimated without detecting the actual torque transmission limit clutch position that corresponds to the high engine torque. Therefore, the torque transmission limit clutch position that corresponds to the high engine torque, at which the vehicle travels less frequently, can appropriately be estimated.

Furthermore, according to this embodiment, when the engagement of the clutch 20 is maintained, the clutch 20 is controlled by the clutch actuator 22 so as to be located at the estimated torque transmission limit clutch position that corresponds to the maximum engine torque Temax. Thus, when the clutch 20 is engaged, the clutch 20 does not slip and can appropriately transmit the maximum engine torque Temax. Meanwhile, in the case where the excess torque that exceeds the maximum engine torque Temax is input during the engagement of the clutch 20, the clutch 20 slips. Thus, the clutch 20 is actuated as the torque limiter for such excess torque.

Moreover, according to this embodiment, the actuation state of the clutch 20 can be switched based on the operation of the clutch pedal 38. In addition, the actuation state of the clutch 20 can be switched regardless of the operation of the clutch pedal 38. Thus, when the clutch pedal 38 is in the state of engaging the clutch 20, the actuation state of the clutch 20 can be controlled such that the clutch 20 is located at the torque transmission limit clutch position that corresponds to the engine torque Te. Accordingly, when the clutch 20 is brought into the engaged state in accordance with the operation of the clutch pedal 38, the clutch actuator 22 can control the clutch 20 at the estimated torque transmission limit clutch position that corresponds to the maximum engine torque Temax. In this way, the clutch 20 does not slip and can appropriately transmit the maximum engine torque Temax. Alternatively, the clutch 20 can be actuated as the torque limiter for the excess torque that exceeds the maximum engine torque Temax. For example, when the clutch 20 is brought into the engaged state, the clutch 20 is controlled to be located at the estimated torque transmission limit clutch position that corresponds to the maximum engine torque Temax. In this way, the clutch 20 can be actuated as the torque limiter for the excess torque, which is possibly generated when the clutch pedal 38 is quickly operated and thus the clutch 20 is quickly actuated for the engagement during downshifting to the gear stage on the low vehicle speed side (the low side).

According to this embodiment, the engine torque Te is categorized by the accelerator pedal operation amount θacc, and the engine torque Te is computed by using the accelerator pedal operation amount θacc. Thus, a learning condition can be set such that the specified clutch characteristic is learned at a time when the accelerator pedal operation amount θacc becomes the specified accelerator pedal operation amount θacc. Therefore, a point (the engine torque Te), at which the actual torque transmission limit clutch position is detected, can appropriately be set.

The embodiment of the invention has been described in detail so far based on the drawings. However, the invention is also applied to other aspects.

For example, in the above-described embodiment, the engine torque Te (or the accelerator pedal operation amount θacc) is categorized into the low engine torque (or the small accelerator pedal operation amount), the intermediate engine torque (or the intermediate accelerator pedal operation amount), and the high engine torque (or the large accelerator pedal operation amount). However, the invention is not limited to this aspect. As long as the clutch characteristic can be learned, the engine torque Te (or the accelerator pedal operation amount θacc) may be categorized into the low engine torque (or the small accelerator pedal operation amount) and the high engine torque (or the large accelerator pedal operation amount). In such a case, the intermediate accelerator pedal operation amount (for example, θacc = 50[%]), which is exemplified in the above-described embodiment, may be set as the small accelerator pedal operation amount, and the engine torque Te that corresponds to this accelerator pedal operation amount may be set as the low engine torque.

In addition, in the above-described embodiment, the electronic control unit learns the specified clutch characteristic based on : the torque transmission limit clutch position that is detected during traveling, during which the engine torque Te is lower than the specified value; and the lower engine torque Te than the specified value. Then, the electronic control unit uses the post-learning specified clutch characteristic to correct the torque transmission limit clutch position at the time when the engine torque Te is equal to or larger than the specified value. However, the invention is not limited to this aspect. For example, the following aspect may be adopted. Based on a difference between the torque transmission limit clutch position that is detected during traveling, during which the engine torque Te is lower than the specified value and a basic torque transmission limit clutch position that corresponds to the lower engine torque Te than the specified value, the electronic control unit computes a correction amount of the basic torque transmission limit clutch position corresponding to the engine torque Te that is equal to or larger than the specified value. Then, the electronic control unit uses the correction amount to correct the torque transmission limit clutch position at the time when the engine torque Te is equal to or larger than the specified value. In this case, S60 and S70 in FIG. 4 are replaced with this aspect. Just as described, the specified clutch characteristic does not always have to be learned. In other words, the clutch position POScl at the time when the engine torque Te is equal to or larger than the specified value may be corrected based on the clutch position POScl, which is detected during traveling of the vehicle 10, during which the engine torque Te is lower than the specified value, and at which the input/output rotational speed difference ΔNcl of the clutch 20 becomes the specified rotational speed difference.

In the above-described embodiment, the transmission 18 is the known manual transmission of the parallel shaft, constantly meshed type. However, the invention is not limited to this aspect. For example, the transmission may be: a transmission that is the known transmission of the parallel shaft, constantly meshed type and in which engagement and disengagement of a dog clutch (that is, a meshing clutch) are controlled by an actuator and a gear stage (a gear shift stage) is thereby switched; a known dual-clutch transmission (DCT) that is the known transmission of the parallel shaft, constantly meshed type and that includes two systems of input shafts; a known automatic transmission of a planetary gear type; a continuously variable transmission; or the like. The power transmission apparatus for the vehicle that includes such a transmission includes the clutch for connecting/disconnecting the power transmission route between the engine and the transmission. For example, in the power transmission apparatus for the vehicle that includes the continuously variable transmission, an engagement device provided in a known forward/reverse travel switching device functions as the clutch. The power transmission apparatus for the vehicle that includes such a transmission does not include the clutch pedal 38. In other words, the invention can be applied to the power transmission apparatus for the vehicle that includes: the transmission that constitutes a part of the power transmission route between the engine and the drive wheels; the clutch for connecting/disconnecting the power transmission route between the engine and the transmission; and the clutch actuator that switches the engagement and disengagement of the clutch.

In the above-described embodiment, the engine 12 is exemplified as the drive power source. This drive power source can be adopted by combining another motor, such as an electric motor, with the engine 12.

Noted that what has been described above is merely one embodiment and the invention can be implemented in aspects in which various modifications or improvements are made to the invention based on knowledge of a person skilled in the art.

## Claims

1. A controller for a vehicle (10),
the vehicle (10) including
an engine (12),
drive wheels (14),
a clutch pedal (38), and
a power transmission apparatus (16) including
a transmission (18) constituting a part of a power transmission route between the engine (12) and the drive wheels (14),
a clutch (20) configured to connect and disconnect the power transmission route between the engine (12) and the transmission (18), and
a clutch actuator (22) configured to switch between engagement and disengagement of the clutch (20),
the controller comprising
an electronic control unit (50) configured to:
switch an actuation state of the clutch (20) by the clutch actuator (22);
actuate the clutch (20) by the clutch actuator (22) during traveling of the vehicle (10) when engine torque is lower than a specified threshold;
detect displacement of the clutch (20) at which a rotational speed difference between an engine speed and an input shaft rotational speed of the transmission (18) becomes a specified rotational speed difference; and
correct the displacement of the clutch (20) when the engine torque is equal to or larger than the specified threshold based on the displacement of the clutch (20).

2. The controller according to claim 1, wherein
the electronic control unit (50) is configured to:
learn a specified clutch characteristic based on lower engine torque than the specified threshold and the displacement of the clutch (20), which is detected by the electronic control unit (50), the specified clutch characteristic indicating a relationship between the displacement of the clutch (20) and torque capacity of the clutch (20); and
correct the displacement of the clutch (20) based on the specified clutch characteristic when the engine torque is equal to or larger than the specified threshold.

3. The controller according to claim 1 or 2, wherein
the electronic control unit (50) is configured to
control the clutch (20) such that the displacement of the clutch (20) corresponds to maximum engine torque when the engagement of the clutch (20) is maintained, and the maximum engine torque is torque that can be output by the engine (12).

4. The controller according to any one of claims 1 to 3, wherein
the electronic control unit (50) is configured to
switch the actuation state of the clutch (20) by the clutch actuator (22) based on an operation of the clutch pedal (38), and switch the actuation state of the clutch (20) by the clutch actuator (22) regardless of the operation of the clutch pedal (38).

5. A control method for a vehicle (10),
the vehicle (10) including
an engine (12),
drive wheels (14),
a clutch pedal (38),
a power transmission apparatus (16) including
a transmission (18) constituting a part of a power transmission route between the engine (12) and the drive wheels (14),
a clutch (20) configured to connect and disconnect the power transmission route between the engine (12) and the transmission (18), and
a clutch actuator (22) configured to switch between engagement and disengagement of the clutch (20), and
an electronic control unit (50) configured to switch an actuation state of the clutch (20) by the clutch actuator (22),
the control method comprising:
actuating, by the electronic control unit (50), the clutch (20) by the clutch actuator (22) during traveling of the vehicle (10) when engine torque is lower than a specified threshold;
detecting, by the electronic control unit (50), displacement of the clutch (20) at which a rotational speed difference between an engine speed and an input shaft rotational speed of the transmission (18) becomes a specified rotational speed difference; and
correcting, by the electronic control unit (50), the displacement of the clutch (20) when the engine torque is equal to or larger than the specified threshold based on the displacement of the clutch (20).

6. The control method according to claim 5, further comprising
learning, by the electronic control unit (50), a specified clutch characteristic based on lower engine torque than the specified threshold and the displacement of the clutch (20), which is detected by the electronic control unit (50), the specified clutch characteristic indicating a relationship between the displacement of the clutch (20) and torque capacity of the clutch (20), and
correcting, by the electronic control unit (50), the displacement of the clutch (20) based on the specified clutch characteristic when the engine torque is equal to or larger than the specified threshold.

7. The control method according to claim 5 or 6, further comprising
controlling, by the electronic control unit (50), the clutch (20) such that the displacement of the clutch (20) corresponds to maximum engine torque when the engagement of the clutch (20) is maintained, the maximum engine torque being torque that can be output by the engine (12).

8. The control method according to any one of claims 5 to 7, further comprising
switching, by the electronic control unit (50), the actuation state of the clutch (20) by the clutch actuator (22) based on an operation of the clutch pedal (38), and
switching, by the electronic control unit (50), the actuation state of the clutch (20) by the clutch actuator (22) regardless of the operation of the clutch pedal (38).
